# EUROPÄISCHE PATENTSCHRIFT

(11) **EP 1 100 138 B1**
(45) Veröffentlichungstag und Bekanntmachung des Hinweises auf die Patenterteilung: **05.04.2017**
(21) Anmeldenummer: 99811043.1
(22) Anmeldetag: 12.11.1999
(51) Int. Cl.: H01M 6/10, H01M 4/70

(54) **Batterie und Batterie-Halterung**
Battery and battery fixing support
Pile et support de fixation de la pile

(43) Veröffentlichungstag der Anmeldung: 16.05.2001
(73) Patentinhaber: Wyon AG, 9050 Appenzell Steinegg (CH)
(72) Erfinder: Wyser, Paul Julian, 9050 Appenzell (CH)
(74) Vertreter: Roshardt, Werner Alfred

(56) Entgegenhaltungen:
- EP-A- 0 531 659
- EP-A- 0 936 691
- PATENT ABSTRACTS OF JAPAN vol. 1998, no. 09, 31. Juli 1998 (1998-07-31) & JP 10 112330 A (NISSAN MOTOR CO LTD), 28. April 1998 (1998-04-28)

## Beschreibung

### Technisches Gebiet

Die Erfindung betrifft eine Batterie mit einem Gehäuse. Die Batterie umfasst zwei Stromanschlüsse, die als in das Gehäuse hineinragende Hohlräume ausgebildet sind, und wobei ein Hohlraum in einem Wickelträger ausgebildet ist.

### Stand der Technik

Elektronische Geräte sind heutzutage allgegenwärtig. Sie kommen nicht aus ohne Batterien (seien es wiederaufladbare oder nicht). Diese können direkt auf einer Platine aufgelötet sein. Besser ist es aber, wenn sie in Halterungen lösbar eingesetzt sind, so dass sie mit relativ geringem Aufwand entfernt werden können. Fortschrittliche Gesetzgeber verlangen nämlich, dass Batterien gesondert entsorgt werden. Es ist klar, dass Halterungen für den Geräte-Hersteller einen Zusatzaufwand mit sich bringen, der an sich unerwünscht ist und daher möglichst klein sein soll.

Batterie-Halterungen bringen nicht nur Kosten mit sich, sondern verbrauchen auch Platz. Ein geringer Raumbedarf ist besonders bei miniaturisierten Geräten wichtig, die auf Dauer vom Benutzer getragen werden (wie z.B. Hörgeräte, Herzschrittmacher, Insulinpumpen und portable oder implantierte Medikament-Dispenser). Dabei spielt natürlich auch die Grösse der Batterie im Verhältnis zur speicherbaren Energie eine zentrale Rolle. Bei vorgegebener Energie soll die Batterie möglichst klein sein.

Hohe Energiedichten lassen sich mit gewickelten Batterien erzielen, wie sie z.B. in der EP 0 144 757 oder der US 5,556,722 beschrieben sind. In einem dichten Gehäuse ist ein Wickel ("jelly roll") mit einem aktiven Kathoden- und einem aktiven Anodenband untergebracht. Die gemeinsam spiralförmig aufgewickelten Bänder sind durch einen Separator elektrisch getrennt, wobei ein flüssiger Elektrolyt oder ein Polymer als Ionenleiter dient. Elektrische Leiter verbinden die Bänder mit aussen am Gehäuse angeordneten Stromanschlüssen (Minus- und Pluspol der Batterie).

Während sehr viel Forschung zur Verbesserung der elektrochemischen Reaktion und der inneren Bestandteile der Batterien betrieben worden ist, ist dem Problem der Kontaktierung und Halterung der Batterie verhältnismässig wenig Beachtung geschenkt worden. Aus der Sicht des Geräte-Herstellers vermögen die verfügbaren Batterien daher in vielen Fällen nicht zu befriedigen.

### Darstellung der Erfindung

Aufgabe der Erfindung ist es, eine Batterie der eingangs genannten Art anzugeben, die dem Geräte-Hersteller Platzersparnis bietet.

Die Lösung der Aufgabe ist durch die Merkmale des Anspruchs 1 definiert. Gemäss der Erfindung umfasst die Batterie zwei Wickelträger, die je einen hohlen Stift umfassen, an welchem ein Anoden- oder Kathodenband elektrisch leitend befestigt ist und die zwei Hohlräume zwei integrierte Steckanschlüsse bilden.

Dies hat den Vorteil, dass der mechanisch-elektrische Kontakt quasi im Inneren der Batterie (d.h. im Inneren des die Batterie einhüllenden - z.B. quaderförmigen - Volumens) platzsparend erfolgen kann. Die Platzersparnis ergibt sich daraus, dass im Inneren von z.B. gewickelten Li-Ionen-Batterien ein ansonsten totes Volumen genutzt werden kann. Die Bänder von gewickelten Batterien haben nämlich einen minimalen Biegeradius, welcher nicht unterschritten werden darf. Dadurch ergibt sich ein ungenutzter Raum im Zentrum der Wicklung.

Ein weiterer Vorteil liegt darin, dass auf diese Weise ein integrierter Steckkontakt zur Verfügung gestellt werden kann, welcher ausgezeichnete Eigenschaften hat, wie sie mit konventionellen Federkontakten nicht erreicht werden können.

Vorzugsweise ist der Hohlraum länglich bzw. rohrförmig ausgebildet. Das heisst, er hat die Form eines sich in das Gehäuseinnere erstreckenden Kanals. Bei einer prismatischen Gehäuseform erstreckt er sich im wesentlichen parallel zur Gehäuse-Hauptachse. Bei einer zylindrischen Batterie wird er sich auf oder nahe der Zylinderachse befinden. Im Querschnitt ist er z.B. rundlich (kreisrund oder oval). Wird ein kantiges Steckelement in den Stromanschluss eingeführt, ritzt sich ersteres in die Oberfläche des letzteren ein, was einen zuverlässigen elektrischen Kontakt gewährleistet.

Der Hohlraum kann auch andere geeignete Formen annehmen (z.B. eine Schlitzform). Bei Bedarf kann er z.B. ein in den Hohlraum hineinragendes Element (Lamelle, Dorn) aufwei sen, welches sich in eine Oberfläche des in den Stromanschluss hineinzuschiebenden Steckelementes eingräbt.

Bei einer gewickelten Batterie kann der Hohlraum im Träger der Wicklung vorgesehen sein. Ein solcher Träger kann im Rahmen der Erfindung z.B. einen hohlen Stift umfassen, an welchem das Anoden- oder Kathodenband zu Beginn des Wickelvorganges elektrisch leitend befestigt wird. Zumindest ein Teil des Inneren des Stiftes ist von aussen zugänglich und bildet den Hohlraum als Stromanschluss für ein Steckelement einer Halterung.

Gemäss einer besonders bevorzugten Ausführungsform ist die Batterie kasten- bzw. quaderförmig und weist genau zwei Wickelstäbe mit erfindungsgemässen Innensteckanschlüssen auf. Die Wickelstäbe sind in den Wendepunkten des flachen Wickels und haben einen Durchmesser von z.B. weniger als 2 mm (typischerweise etwa 1 mm). Anstelle von zwei Wickelstäben kann beispielsweise auch eine flache Wickelplatte vorgesehen sein, die zwei von ausserhalb des Batteriegehäuses zugängliche Hohlräume als Stromanschlüsse hat.

Weil bei dieser Ausführungsform die ohnehin erforderlichen Wickelträger gleichzeitig die Stromanschlüsse darstellen, sind die bei bekannten Batterien zusätzlich erforderlichen elektrischen Verbindungselemente zu aussen am Gehäuse angeordneten Anschlüssen hinfällig.

Es kann auch nur ein einziger integrierter Steckkontakt vorgesehen sein, während der zweite Stromanschluss ähnlich wie beim Stand der Technik durch eine Aussenfläche des Gehäuses gebildet wird.

Unter bestimmten Umständen kann es vorteilhaft sein, wenn sich der Hohlraum durch das Gehäuse hindurch erstreckt. Das heisst, er ist von zwei (gegenüberliegenden) Seiten zugänglich. Auf diese Weise wird es möglich, auf kleinstem Raum Batterien in Serie zu schalten oder Batterien als optionale Zwischenelemente zwischen einem Geräteanschluss und einer Stromzuführung einzusetzen.

Der Hohlraum braucht allerdings nicht durchgängig zu sein. Er kann z.B. irgendwo im Inneren eine Trennwand haben, die einen direkten mechanischen Kontakt zwischen einem von "unten" und einem von "oben" eingeführten Stecker vermeidet oder einen Anschlag für einen von aussen eingeführten Kontaktstift bildet.

Abhängig von der axialen Länge der Batterie wird sich der Hohlraum mindestens über einen Drittel, vorzugsweise über mehr als die Hälfte der genannten Länge erstrecken. Bei kleinen Batterien ist der Hohlraum relativ betrachtet grösser als bei grossen (Stabilität der Kontaktstifte).

In bestimmten Anwendungen kann es zudem von Vorteil sein, wenn die Batterie zusätzlich eine gegenüber dem elektrochemisch aktiven Batterieinnenraum isolierte Durchführung hat. Diese kann z.B. durch ein elektrisch leitendes Rohr gebildet sein, welches sich von einem Ende der Batterie zum anderen erstreckt. So kann ein für andere Zwecke (z.B. Steuerung, andere Spannung) benötigter Anschluss von der die Batterie tragenden Platine durch die Batterie platzsparend z.B. nach aussen an den Geräteanschluss geführt werden.

Im Bereich zwischen den beiden Wickelträgern kann auch (Anstelle oder zusätzlich zu der elektrisch isolierten Durchführung) eine elektronische Schaltung untergebracht sein. Diese ist gegenüber dem elektrochemisch aktiven Innenraum des Gehäuses isoliert. Sie kann z. B. über zwei (oder mehrere) Pins, welche durch das Gehäuse hindurch nach aussen geführt sind, von aussen kontaktiert werden. Eine solche integrierte Schaltung kann z. B. die elektronische Sicherung der Batterie oder die Ladeelektronik sein (zur Durchführung bzw. Steuerung des Ladevorgangs einer wiederaufladbaren Zelle).

Die Batterie kann eine Li-Ionen-Batterie sein. An einem ersten metallischen Wickelstab ist ein Anodenband und an einem zweiten ein Kathodenband befestigt. Zwischen diesen ist weiter auch ein Separatorband aufgewickelt. Von einem Wickelstab können auch zwei Bänder (zwei Anoden- oder zwei Kathodenbänder) ausgehen. Auch doppelseitig beschichtete Bänder können verwendet werden.

Für die einfache und sichere Handhabung der Batterie ist es von Vorteil, wenn eine konstruktive Verpolsicherung vorgesehen ist. Eine solche verhindert, dass die Batterie in einem Gerät bzw. in einer passenden Halterung versehentlich mit vertauschter Polarität eingesetzt werden kann. Sie lässt sich kostengünstiger realisieren als eine elektronische Verpolsicherung.

Eine konstruktive Verpolsicherung kann z.B. ein zusätzliches, im Bereich des Steckanschlusses an der Aussenseite des Batteriegehäuses mechanisch vorstehendes Element sein. Es ist auch möglich, die Steckanschlüsse in der Form asymmetrisch oder im Durchmesser unterschiedlich auszubilden, so dass die Kontaktelemente der Halterung gar nich falsch einführbar sind. Eine andere Möglichkeit besteht darin, an der Aussenseite des Batteriegehäuses eine Ausnehmung vorzusehen, in welche ein an der Halterung vorstehender Teil unverwechselbar eingreifen kann.

Eine Halterung für eine erfindungsgemässe Batterie zeichnet sich dadurch aus, dass sie mindestens ein vorstehendes Steckelement aufweist, welches zur Aufnahme in einem Hohlraum einer Batterie mit integriertem Steckanschluss und gleichzeitig als mechanische Halterung der Batterie ausgebildet ist.

Vorzugsweise ist das Kontaktelement kantig, das heisst es hat einen quer zur Einführrichtung mehr oder weniger spitz vorstehenden Teil, welcher sich beim bestimmungsgemässen Aufsetzen der Batterie in die Obefläche des Stromanschlusses im Hohlraum eingraben kann zur Schaffung eines bestmöglichen Kontaktes. Das Kontaktelement kann ein Vierkantstift sein, wie er im Rahmen der früher verwendeten Wire-Wrap-Technik verwendet wurde.

Insbesondere wenn die Batterie genau zwei erfindungsgemäss integrierte Steckanschlüsse hat, kann die Halterung so ausgebildet werden, dass die Batterie ausschliesslich durch zwei Steckelemente kontaktiert und gehalten ist. In mechanischer Hinsicht wird die Batterie im wesentlichen durch Kraftschluss gehalten.

Es soll aber nicht ausgeschlossen werden, dass bei Bedarf zusätzliche mechanische Halterungselemente eingesetzt werden.

Sind zwei Kontakt- bzw. Steckelemente an der Halterung identisch ausgebildet, ist ein konstruktives Sicherheitselement wünschenswert. Dieses kann als Anschlag für ein an der Batterie vorstehendes Element ausgeführt sein, welcher verhindert, dass die Batterie korrekt aufgesteckt werden kann. Es kann aber auch ein Formteil sein, welches in unverwechselbarer Weise mit der Batterie zusammenwirkt.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: eine schematische Darstellung einer erfindungsgemässen Batterie auf einer Halterung;
- Fig. 2: eine schematische Darstellung des Querschnitts A-A gemäss Fig. 1;
- Fig. 3: eine stark vergrösserte Darstellung des unteren und des oberen Abschlusses des Wickelstabes;
- Fig. 4: eine schematische Darstellung einer Batterie mit durchgehenden Stromanschlüssen;
- Fig. 5a, b: eine schematische Darstellung einer Batterie mit integrierter Schaltung im Aufriss und im Querschnitt.

Grundsätzlich sind in den Figuren gleiche Teile mit gleichen Bezugszeichen versehen.

### Wege zur Ausführung der Erfindung

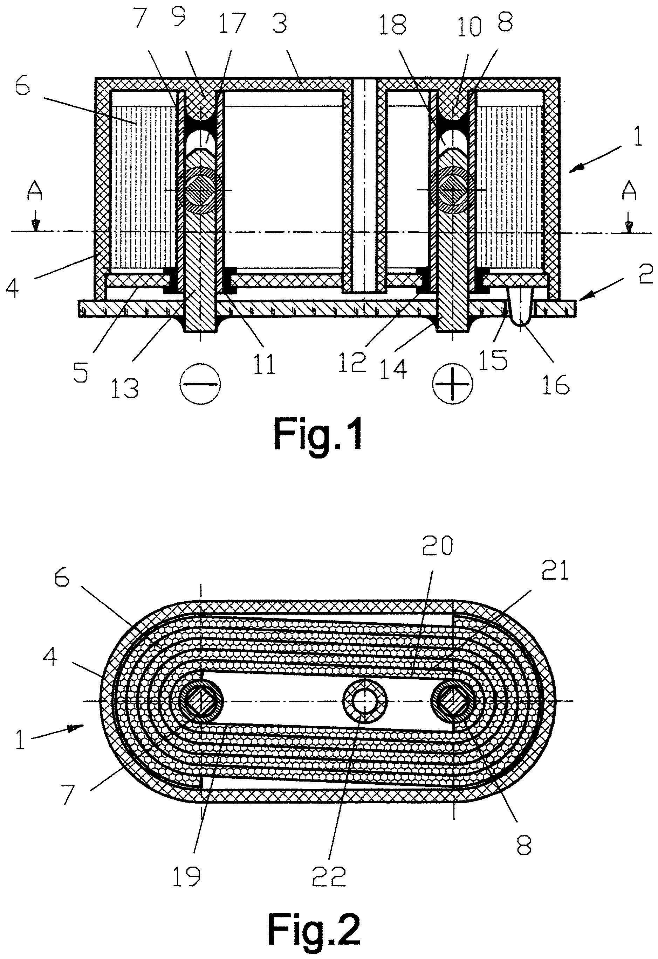

Fig. 1 zeigt stark vergrössert eine Batterie 1 auf einer Schaltungsplatine 2 (Print). In der praktischen Ausführung kann die Batterie z.B. einige Millimeter (z.B. bis zu 10 mm) hoch und mehrere (z.B. 8 bis 20 mm) Millimeter breit sein. (In der Regel ist die Batterie weniger hoch als breit.) Sie ist z.B. im Wesentlichen kastenförmig mit stark gerundeten Schmalseiten (vgl. Fig. 2). Die Schaltungsplatine 2 ist mit (andeutungsweise gezeichneten) Leiterbahnen und (nicht dargestellten) elektronischen Bauteilen bestückt entsprechend den gerätespezifischen Bedürfnissen.

Das Gehäuse wird im vorliegenden Beispiel durch einen einteiligen Behälter aus Boden 3 und Seitenwänden 4 und durch einen diesen Behälter gasdicht verschliessenden Deckel 5 gebildet. Der Deckel 5 kann gegenüber den Rändern der Seitenwände 4 leicht zurückversetzt eingeschweisst sein. (Aus der Sicht des Benutzers der fertigen Batterie stellt der Deckel 5 eigentlich den Batterieboden dar, weil er in der Anwendung in der Regel nach unten zeigen wird.)

Im Inneren des Gehäuses befindet sich in an sich bekannter Weise ein mit Elektrolyt getränkter Wickel 6 aus einem Anodenband, einem Kathodenband und einem Separator. Zwei Röhrchen 7, 8, welche über Zapfen 9, 10 an der Innenseite des Bodens 3 angebracht sind, dienen als Träger des Wickels 6. Der Abstand der beiden Röhrchen 7, 8 entspricht bei der gezeigten Batterie etwa der Differenz zwischen der Breite und der Tiefe (= Länge) des Gehäuses.

Der Deckel 5 (welcher vorliegend aus einem nicht-leitenden Material besteht) weist zwei mit Rohrnieten 11, 12 ausstaffierte Bohrungen auf, durch welche die Röhrchen 7, 8 hindurchgeführt sind. (Die Rohrnieten 11, 12 sorgen für einen dichten Verschluss.) Es ist nun erkennbar, dass in den Röhrchen 7, 8 kanalförmige Hohlräume 17, 18 gebildet werden, welche im Inneren des Gehäuses angeordnet sind und von aussen unmittelbar zugänglich sind. Sie erstrecken sich im Wesentlichen vom Deckel 5 bis zum Boden 3.

Im vorliegenden Ausführungsbeispiel ist das Röhrchen 7 elektrisch leitend mit dem Anodenband und das Röhrchen 8 entsprechend mit dem Kathodenband verbunden, so dass das eine Röhrchen den Minuspol und das letztere den Pluspol der Batterie bildet.

In der Schaltungsplatine 2 sind zwei Vierkantstifte 13, 14 eingelötet. Ihr gegenseitiger Abstand entspricht dem Abstand der Röhrchen 7, 8 und ihr Eckmass (Diagonale des Querschnitts) ist um 0.05 bis 0.15 mm grösser als der Innendurchmesser der Röhrchen 7, 8. Die Länge der Vierkantstifte 13, 14 ist vorliegend grösser als die halbe Höhe der Batterie 1, so dass sie tiefer als bis zur Hälfte der Röhrchen 7, 8 eindringen.

Am Deckel 5 ist neben den Stromanschlüssen eine Verpolsicherung 16 vorgesehen. Es handelt sich um ein nasenartig vorstehendes, einteilig am Deckel 5 angeformtes Element. Ein in der Schaltungsplatine 2 angebrachtes Loch 15 ist positionsmässig auf die Verpolsicherung 16 abgestimmt. Bei polrichtigem Aufstecken der Batterie 1 auf die Halterung passen Verpolsicherung 16 und Loch 15 ineinander.

Fig. 2 zeigt einen schematischen Querschnitt der Batterie 1 entlang der Linie A-A gemäss Fig. 1. Die Seitenwände 4 umschliessen einen kastenförmig abgeflachten, teilweise zylindrischen Innenraum. Am Röhrchen 7 ist - wie bereits erwähnt - ein Anodenband 19 und am Röhrchen 8 ein Kathodenband 20 schweisstechnisch angepunktet. Zwischen Anoden- und Kathodenband 19 bzw. 20 ist ein Separatorband 21 aufgewickelt, welches mit einem geeigneten Elektrolyt getränkt ist.

Das Gehäuse besteht z. B. aus nicht-leitendem Kunststoff, wobei als Dampfsperre eine Metallisierung aufgebracht sein kann.

Der elektrochemisch aktive Raum wird durch den Wickel 6 gebildet. Aus Fig. 2 ist erkennbar, dass der Bereich zwischen den beiden Röhrchen 7, 8 nichts zur Stromerzeugung beiträgt (weil dort keine elektrochemisch aktiven Elemente vorhanden sind). Er ist in diesem Sinn ungenutzt. Indem die Stromanschlüsse erfindungsgemäss diesen Bereich nutzen, wird bei vorgegebenem aktivem Volumen der Innenraum der Batterie besser ausgenutzt.

Gemäss einer besonders bevorzugten Ausführungsform ist im genannten Bereich eine isolierte Durchführung 22 vorgesehen. Es handelt sich z. B. um ein innenseitig leitendes Röhrchen, welches durch Boden 3 und Deckel 5 des Gehäuses hindurchgeführt ist und so eine elektrisch durchgehende Verbindung von einer Seite zur anderen schafft. Die Durchführung ist gegenüber dem aktiven Innenraum der Batterie und den beiden Stromanschlüssen elektrisch isoliert und hat nichts mit der eigentlichen Funktion der Batterie zu tun,

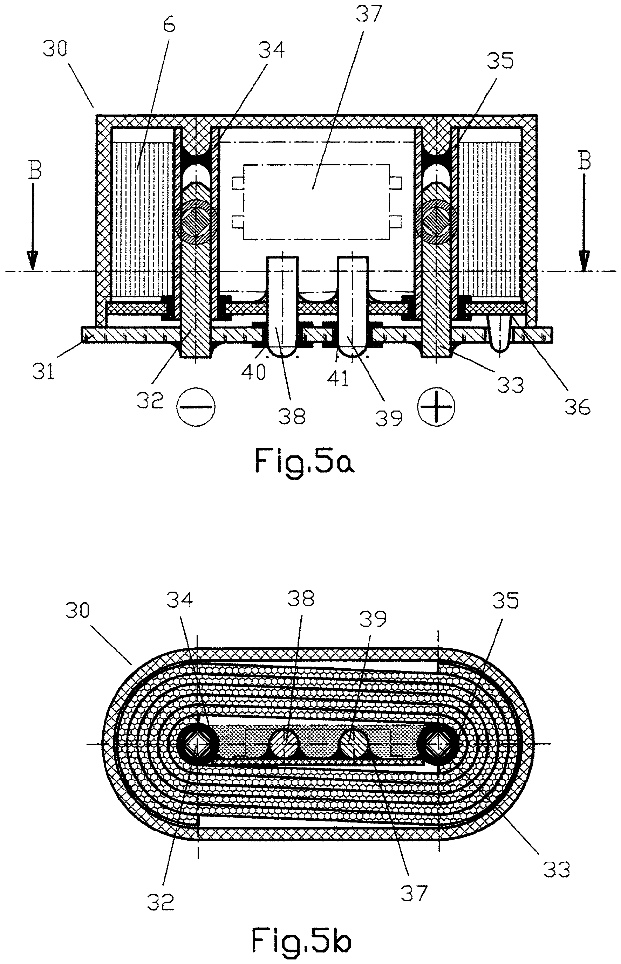

Fig. 5a, b zeigen eine weitere bevorzugte Ausführungsform. Die Batterie 30 ist wiederum auf einer Schaltungsplatine 31 aufgesteckt, welche zwei Vierkantstifte 32,33 aufweist. An einer (in Fig. 5a nach unten gerichteten) Gehäuseseite 36 der Batterie 30 münden in gleicher Weise wie bei der Ausführungsform gemäss Fig. 5a, b Hohlträger 34, 35, welche einerseits den Wickel 39 tragen und andererseits die hohlen Aufnahmen für der die Vierkantstifte 32, 33 bilden.

Der wesentliche Unterschied zur Ausführungsform gemäss Fig. 1 besteht darin, dass im elektrochemisch nicht genutzten Bereich zwischen den beiden Hohlträgern 34, 35 eine flache, versiegelte elektronische Schaltung 37 eingesetzt ist. Ihre Bauhöhe entspricht etwa einem Durchmesser der Hohlträger 34, 35. Sie wird z. B. durch zwei Kontaktstifte 38, 39 (Pins) kontaktiert, welche durch die Gehäuseseite 36 nach aussen geführt sein können. In der Schaltungsplatine 31 sind z. B. in eine geeigneten Anordnung zwischen den beiden Vierkantstifte 32, 33 zwei Stecköffnungen 40, 41 vorgesehen, in welche die Kontaktstifte 38, 39 eingesteckt werden können.

Die Schaltung 37 kann z. 8. eine elektronische Sicherung und/oder eine Ladeelektronik sein. Man kann sich z. B. vorstellen, dass auf der Rückseite der Schaltungsplatine 31 eine Spule angeordnet ist, welche eine induktive Kopplung zu einem Leistungssender ermöglicht, so dass die Batterie 30 berührungslos geladen werden kann. Die Ladeelektronik konvertiert die Wechselspannung in eine Gleichspannung, welche direkt über die Hohlträger 34, 35 an Kathode und Anode der Batterie abgegeben wird.

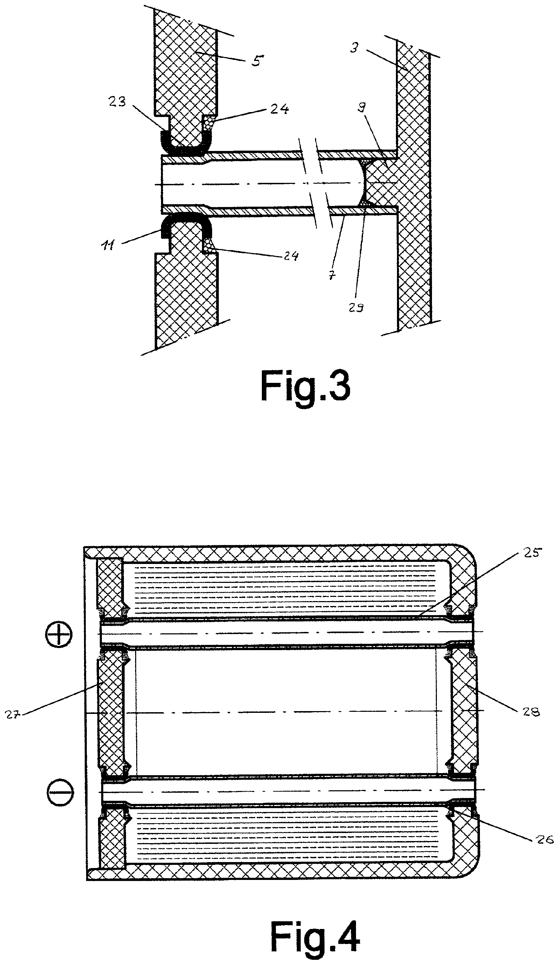

Mit Bezugnahme auf Fig. 3 soll das Verfahren zur Herstellung der gezeigten Batterie kurz erläutert werden.

Als erstes wird einerseits ein gefässartiger Spritzgussteil gefertigt, welcher nach innen ragende Zapfen 9 aufweist, und andererseits ein passender Deckel 5 mit runden Öffnungen (vgl. Bezugszeichen 23).

In die Öffnung 23 wird eine Rohrniete 11 (z.B. aus verzinntem Messing) eingesetzt. Ferner wird innenseitig eine Dichtung 24 angebracht, welche den Übergang zwischen Rohrniete 11 und Deckel 5 versiegelt. In die Rohrniete 11 kann dann das Röhrchen 7, das ebenfalls aus verzinntem Messing besteht und dessen Aussendurchmesser geringfügig grösser ist als der Innendurchmesser der Rohrniete 11, eingepresst werden. Dabei entsteht eine Kaltverschweissung.

Die Röhrchen 7, 8 bilden den Träger für das nachfolgende Wickeln der Anoden-, Kathoden- und Separatorbänder 19, 20 bzw. 21.

Der gefässartige Spritzgussteil wird mit einer Elektrolytlösung gefüllt und der Deckel 5 mit dem Wickel 6 wird aufgesetzt. Die Zapfen 9, 10, welche an den Enden konisch verjüngt sind, gleiten in die freien Enden der Röhrchen 7 bzw. 8 und sorgen so für deren Positionierung. Eine Dichtung 29 sorgt für die Versiegelung zwischen Zapfen 9 und Röhrchen 7. Zuletzt wird der Deckel 5 mit dem gefässartigen Spritzgussteil verschweisst.

Fig. 4 zeigt eine andere Ausführungsform. Bei dieser sind die als Stromanschlüsse dienenden Röhrchen 25, 26 nicht nur durch den Deckel 27, sondern auch durch den Boden 28 hindurchgeführt. Die Batterie ist also von beiden Seiten her kontaktierbar. Werden von oben (nicht dargestellte) Verbindungsstifte zur Hälfte in die Röhrchen 25, 26 eingesteckt, kann eine gleichartige zweite Batterie oder ein Ladegerät auf die Verbindungsstifte aufgesetzt werden ("Huckepack-Anordnung").

Aus der Fig. 4 ist erkennbar, dass die Öffnungen im Boden 28 gegen innen zurückversetzt sind. In konstruktiver Hinsicht sind die Durchbrüche gleich ausgebildet wie diejenigen im Deckel 27.

Die beschriebenen Ausführungsbeispiele können in vielfältiger Weise abgewandelt werden. Insbesondere können auch andere Abläufe der Herstellung verwendet werden. Es wird dann z. B. gar nicht nötig sein, eine Rohrniete 11 zu verwenden oder eine Kaltverschweissung durchzuführen.

Die Durchführung kann auch mit einem Pol der Batterie elektrisch verbunden sein. Auf diese Weise können mit demselben Batterie-Typ unterschiedliche Halterungen bestückt werden.

Die inneren Stromanschlüsse können auch an die Gehäuseaussenseite geführt werden, so dass die Batterie auch in konventionelle Halterungen eingesetzt werden kann. Bei der Ausführungsform gemäss Fig. 4 würde das Röhrchen 25 z.B. mit einer am Boden angebrachten Metallisierung und das Röhrchen 26 mit einer am Deckel 27 angebrachten verbunden.

Die Erfindung eignet sich für jede elektrochemische Zelle (sei sie wiederaufladbar oder nicht).

Zusammenfassend ist festzustellen, dass durch die erfindungsgemässe Konstruktion Platz eingespart werden kann, weil die Kontakte zwischen der Elektronik des Gerätes und der Batterie im Inneren der Batterie erfolgen und eine die Batterie umgreifende Halterung vermeiden, und weil die Steckkontaktverbindung gleichzeitig als alleinige mechanische Halterung eingesetzt werden kann. Die Halterung braucht im Wesentlichen nur aus Kontaktstiften zu bestehen, was eine Kostenersparnis gegenüber den bekannten, konstruktiv aufwendigeren Halterungen bedeutet. Bei geeigneter Aussenform kann die Batterie für höchstminiaturisierte Geräte ohne zusätzliche Ummantelung direkt aufgesetzt ("Huckepack") oder als Zwischenstück eingesetzt werden.

## Patentansprüche

1. Batterie mit einem Gehäuse, umfassend zwei Stromanschlüsse, wobei mindestens ein Stromanschluss in einem in das Gehäuse hineinragenden Hohlraum (17, 18) ausgebildet ist, und wobei der Hohlraum (17, 18) in einem Wickelträger (7, 8) ausgebildet ist
**dadurch gekennzeichnet, dass**
die Batterie einen zweiten Wickelträger (7, 8) umfasst, in dem ein zweiter Hohlraum (17, 18) ausgebildet ist, wobei die zwei Wickelträger (7, 8) je einen hohlen Stift umfassen, an welchem ein Anoden- oder Kathodenband (19, 20) elektrisch leitend befestigt ist und die zwei Hohlräume (17, 18) zwei integrierte Steckanschlüsse bilden.

2. Batterie nach Anspruch 1, **dadurch gekennzeichnet, dass** der Hohlraum (17, 18) länglich rohrförmig, insbesondere im Querschnitt rundlich ausgebildet ist.

3. Batterie nach einem der Ansprüche 1 oder 2, **dadurch gekennzeichnet, dass** sich der Hohlraum (17, 18) durch das Gehäuse hindurch erstreckt.

4. Batterie nach einem der Ansprüche 1 bis 3, **dadurch gekennzeichnet, dass** durch das Gehäuse eine elektrisch leitende Durchführung hindurchgeführt ist, welche gegenüber der Batterie isoliert ist.

5. Batterie nach einem der Ansprüche 1 bis 4, **dadurch gekennzeichnet, dass** innerhalb des Gehäuses in einem Bereich zwischen den beiden Wickelträgern (34, 35) eine Schaltung (37) vorgesehen ist.

6. Batterie nach einem der Ansprüche 1 bis 5, **dadurch gekennzeichnet, dass** sie in der Art einer Li-Ionen-Batterie ausgeführt ist, welche einen Wickel (6) mit einem Anoden- und einem Kathodenband (19, 20) und einem Separator (21) aufweist.

7. Batterie nach einem der Ansprüche 1 bis 6, **dadurch gekennzeichnet, dass** sie eine konstruktive Verpolsicherung (16) aufweist.

8. System umfassend eine Batterie gemäss einem der Ansprüche 1 bis 7 und eine Halterung mit mindestens einem vorstehenden Steckelement, welches zur Aufnahme in den Hohlraum der besagten Batterie und gleichzeitig als mechanische Halterung der Batterie ausgebildet ist.

## Claims

1. Battery having a housing, comprising two electrical connections, wherein at least one electrical connection is formed in a hollow space (17, 18) which protrudes into the housing, and wherein the hollow space (17, 18) is formed in a winding support (7, 8),
**characterized in that**
the battery comprises a second winding support (7, 8) in which a second hollow space (17, 18) is formed, wherein the two winding supports (7, 8) each comprise a hollow pin to which an anode or cathode strip (19, 20) is electrically conductively connected and the two hollow spaces (17, 18) form two integrated plug connections.

2. Battery according to Claim 1, **characterized in that** the hollow space (17, 18) is of elongate tubular design, in particular with a round cross section.

3. Battery according to either of Claims 1 and 2, **characterized in that** the hollow space (17, 18) extends through the housing.

4. Battery according to one of Claims 1 to 3, **characterized in that** an electrically conductive bushing which is insulated from the battery is routed through the housing.

5. Battery according to one of Claims 1 to 4, **characterized in that** a circuit (37) is provided within the housing in a region between the two winding supports (34, 35).

6. Battery according to one of Claims 1 to 5, **characterized in that** it is designed in the form of an Li-ion battery which has a winding (6) with an anode and a cathode strip (19, 20) and a separator (21).

7. Battery according to one of Claims 1 to 6, **characterized in that** it has a structural polarity-reversal prevention arrangement (16).

8. System comprising a battery according to one of Claims 1 to 7 and a holder having at least one projecting plug element which is designed to be accommodated in the hollow space of the said battery and at the same time as a mechanical holder for the battery.

## Revendications

1. Batterie dotée d'un boîtier, comprenant deux bornes électriques, au moins une borne électrique étant formée dans un espace creux (17, 18) qui fait saillie à l'intérieur du boîtier, et l'espace creux (17, 18) étant formé dans un porte-bobine (7, 8),
**caractérisée en ce que**
la batterie comprend un deuxième porte-bobine (7, 8) dans lequel est formé un deuxième espace creux (17, 18), les deux porte-bobines (7, 8) comportant chacun une broche creuse à laquelle est fixée de manière électriquement conductrice une bande d'anode ou de cathode (19, 20) et les deux espaces creux (17, 18) formant deux bornes mâles intégrées.

2. Batterie selon la revendication 1, **caractérisée en ce que** l'espace creux (17, 18) est réalisé en forme tubulaire allongée, notamment avec une section transversale arrondie.

3. Batterie selon l'une des revendications 1 ou 2, **caractérisée en ce que** l'espace creux (17, 18) s'étend à travers le boîtier.

4. Batterie selon l'une des revendications 1 à 3, **caractérisée en ce qu'**une traversée électriquement conductrice passe à travers le boîtier, laquelle est isolée par rapport à la batterie.

5. Batterie selon l'une des revendications 1 à 4, **caractérisée en ce qu'**un circuit (37) se trouve à l'intérieur du boîtier, dans une zone entre les deux porte-bobines (34, 35).

6. Batterie selon l'une des revendications 1 à 5, **caractérisée en ce qu'**elle est réalisée à la manière d'une batterie aux ions de lithium qui possède une bobine (6) avec une bande d'anode et une de cathode (19, 20) et un séparateur (21).

7. Batterie selon l'une des revendications 1 à 6, **caractérisée en ce qu'**elle possède une sécurité structurelle contre les inversions de polarisation (16).

8. Système comprenant une batterie selon l'une des revendications 1 à 7 et un élément de maintien muni d'au moins un élément mâle en saillie, lequel est configuré pour être accueilli dans l'espace creux de ladite batterie et simultanément en tant que maintien mécanique de la batterie.
